# FASCICULE DE BREVET EUROPEEN

(11) **EP 4 198 653 B1**
(45) Date de publication et mention de la délivrance du brevet: **08.10.2025**
(21) Numéro de dépôt: 21215666.5
(22) Date de dépôt: 17.12.2021
(51) Int. Cl.: G04R 60/08, G04G 21/08

(54) **OBJET ELECTRONIQUE PORTABLE**
TRAGBARES ELEKTRONISCHES OBJEKT
PORTABLE ELECTRONIC OBJECT

(43) Date de publication de la demande: 21.06.2023
(73) Titulaire: ETA SA Manufacture Horlogère Suisse, 2540 Grenchen (CH)
(72) Inventeur: STEHLIN, Xavier, 1588 Cudrefin (CH)
(74) Mandataire: ICB SA

(56) Documents cités:
- US-A1- 2011 298 670
- US-A1- 2015 309 626
- US-A1- 2018 088 724

## Description

### Domaine technique de l'invention

L'invention concerne un objet électronique portable comprenant un élément d'habillage formant en tout ou partie une interface tactile et comportant un circuit d'antenne d'un module de communication dudit objet.

### Arrière-plan technologique

On connait dans l'état de la technique de nombreux objets électroniques portables susceptibles de se connecter à des réseaux de communication tels que des montres électroniques qui sont pourvus d'interfaces tactiles classiquement agencées dans les glaces de ces dernières. De telles interfaces tactiles sont utilisées généralement pour améliorer l'interactivité des montres et en simplifier les manipulations en particulier lorsque ces dernières proposent un nombre conséquent de menus et de fonctions.

Afin de pouvoir se connecter à des réseaux de communications tels que des réseaux de type Bluetooth ou encore en lien avec la géolocalisation, de tels objets électroniques comprennent des moyens de communication intégrant classiquement une antenne. Il est connu que la taille optimale d'une telle antenne dépend directement de la longueur d'onde du signal émis/reçu. En effet, une antenne de longueur optimale permet d'envoyer/recevoir un signal en entier et à pleine puissance.

Dans des objets électroniques tels que des montres, l'espace disponible étant limité, une antenne doit disposer d'un design adapté pour s'intégrer dans le boitier de la montre. Et si la montre intègre un moyen de communication radio qui fonctionne sur des fréquences radio (telles que le 2.4 GHz ou 1.5 GHz), la taille du produit devient critique par rapport à la longueur d'onde (120 mm et 200 mm).

Par ailleurs, d'autres contraintes doivent également être prises en compte du fait que des objets électroniques comme les montres comportent beaucoup de parties métalliques et qu'une antenne doit en être isolée. Le document US 2015/309626 A1 divulgue un objet électronique portable comprenant un boitier pourvu d'un élément d'habillage formant en tout ou partie une interface tactile dudit objet électronique, ledit élément d'habillage comportant un corps contenant un substrat sur lequel sont réalisés un circuit d'antenne d'un module de communication dudit objet et un circuit de commande tactile d'un organe de commande tactile de cet objet.

Dans ce contexte, on comprend qu'il existe un besoin de trouver une solution, notamment qui ne présente pas les inconvénients de l'art antérieur.

### Résumé de l'invention

Un des buts de l'invention est de disposer d'un objet électronique portable telle qu'une montre, comprenant une interface tactile et intégrant un circuit d'antenne ayant une longueur optimale pour envoyer/recevoir un signal en entier et à pleine puissance et venant s'intégrer dans le boitier de cette montre dont le volume d'accueil est limité.

Un autre but de l'invention est d'obtenir un objet électronique portable dont l'esthétisme, la consommation énergétique et les coûts de fabrication ne soient pas impactés ou peu impactés par l'intégration d'une interface tactile et d'un circuit d'antenne dans un élément d'habillage de cet objet.

Dans ce dessein, l'invention concerne un objet électronique portable selon la revendication 1.

Dans d'autres modes de réalisation :
- la face supérieure de la partie principale de ce substrat est de préférence positionnée dans une enceinte définie dans le corps creux de l'élément d'habillage en regard d'une paroi de cette enceinte qui constitue une face externe de cet élément d'habillage ;
- le substrat est en plastique flexible ;
- le circuit de commande comprend un microcontrôleur connecté à ladite au moins une électrode par l'intermédiaire d'au moins une piste de connexion réalisée sur la face supérieure du substrat ;
- l'élément d'habillage est fabriqué en au moins un matériau diélectrique et/ou électriquement non conducteur ;
- l'objet comprend une montre notamment une montre connectée comprenant l'élément d'habillage qui est une lunette pourvue de l'enceinte dans laquelle est agencé ledit substrat ;
- le module de communication est configuré pour communiquer selon un protocole de type Bluetooth.

### Brève description des figures

D'autres caractéristiques et avantages de la présente invention ressortiront plus clairement de la description détaillée qui suit, faite en liaison avec les figures annexées listées ci-dessous :
- La figure 1 est une représentation schématique d'un objet électronique portable comprenant un élément d'habillage formant en tout ou partie une interface tactile dudit objet selon un mode de réalisation de l'invention ;
- La figure 2 est une représentation d'un substrat susceptible d'être compris dans une enceinte de l'élément d'habillage, ledit substrat comportant un circuit d'antenne d'un module de communication dudit objet et un circuit de commande tactile d'un organe de commande tactile de cet objet selon le mode de réalisation de l'invention ;
- La figure 3 est une représentation d'une variante du substrat comprenant le circuit d'antenne et le circuit de commande tactile, selon le mode de réalisation de l'invention, et
- La figure 4 représente une lunette formant l'élément d'habillage comprenant le substrat lorsque l'objet électronique portable est une montre électronique selon le mode de réalisation de l'invention.

### Description détaillée de l'invention

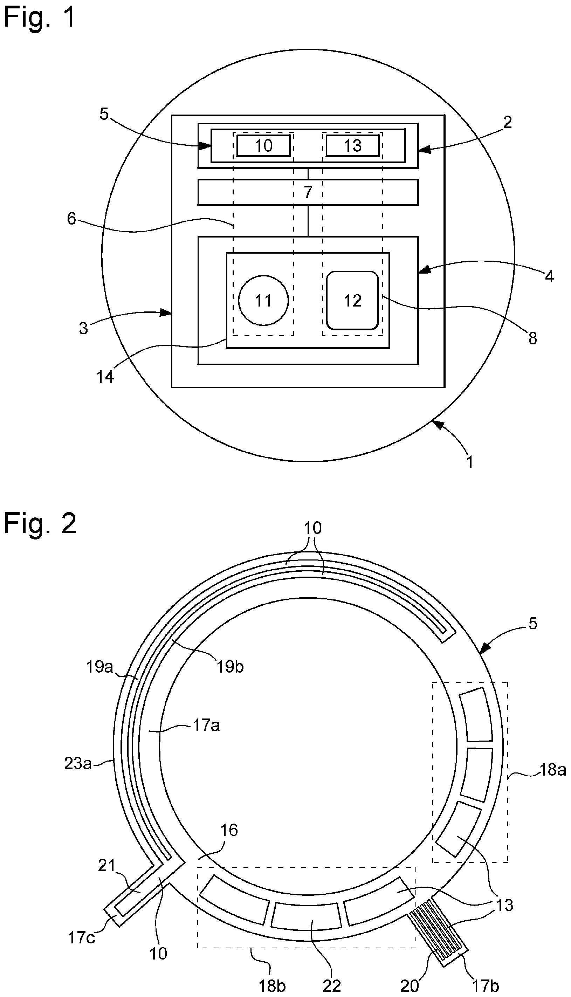

En référence à la figure 1, l'invention porte sur un objet électronique portable 1 ou encore un appareil électronique portable. Dans le présent mode de réalisation de cette invention, un tel objet électronique 1 est de préférence une montre électronique 1 comme par exemple une montre connectée. On notera de manière alternative que cet objet électronique 1 peut être aussi un ordiphone, un appareil GPS mobile, un ordinateur portable, une tablette tactile, une montre de sport, un tracker de fitness, un appareil cardiofréquence-mètre ou encore un baladeur de musique.

Dans ce contexte, un tel objet électronique portable 1 est pourvu d'un boitier 3 comportant un élément d'habillage 2 formant en tout ou partie une interface tactile dudit objet électronique 1 par l'intermédiaire de laquelle un porteur dudit objet peut interagir avec ce dernier. Ce boitier 3 comporte également une carrure qui peut être réalisée en métal (par ex. en acier, de préférence inoxydable), en un matériau synthétique (par ex. dans un matériau composite comprenant une matrice polymère chargée de fibres, typiquement de carbone) ou en céramique ou encore en au moins un matériau diélectrique et/ou électriquement non conducteur. Le boitier 3 comprend aussi un fond et une glace qui participent à former avec la carrure, une enceinte de ce boitier 3. Dans une telle enceinte, sont agencés notamment un dispositif d'affichage 7 et un dispositif électronique 4 dudit objet électronique 1.

Le dispositif d'affichage 7 comporte des éléments d'affichage pouvant être analogiques comme des aiguilles et/ou digitales comme un écran LCD, LED ou encore OLED. Un tel dispositif d'affichage 7 est localisé entre la glace et le dispositif électronique 4, un espaceur ou rehaut pouvant être agencé entre la glace et ce dispositif d'affichage 7.

S'agissant du dispositif électronique 4, il est configuré pour fournir au moins une information devant être affichée sur ce dispositif d'affichage 7. Ce dispositif électronique 4 comporte de manière non exhaustive et non limitative un module de communication 6, un module de contrôle de l'objet électronique portable 1, un accumulateur d'énergie électrique notamment une batterie ainsi que différents capteurs comme par exemple des capteurs participant à la détermination d'une géolocalisation, d'une altitude ou d'une température d'un lieu ou encore dans la détermination de paramètres physiologiques, biométriques, vitaux et/ou comportementaux du porteur de l'objet électronique 1.

On notera que dans cette configuration, le module de contrôle permet au porteur d'un tel objet électronique 1 de pouvoir interagir avec ce dernier notamment en pouvant activer/désactiver/sélectionner différentes fonctions susceptibles d'être mises en œuvre par cet objet électronique 1. Ce module de contrôle comprend un organe de commande tactile 8 et dans des alternatives d'autres organes de commande tels que des poussoirs ou boutons agencés sur la carrure.

Dans le dispositif électronique 4, le module de communication 6 comprend un circuit d'antenne 10 connecté à un microcircuit 11, et l'organe de commande tactile 8 comprend un microcontrôleur 12 connecté à un circuit de commande tactile 13. Ainsi que nous le verrons par la suite, le circuit d'antenne 10 et le circuit de commande 13 sont agencés sur un substrat 5 compris dans l'élément d'habillage 2, ce dernier formant en tout ou partie une interface tactile dudit objet électronique 1.

Un tel élément d'habillage 2 est de préférence fixé sur la carrure du boitier 3. Cet élément d'habillage 2 peut être une pièce fixée de manière amovible sur la carrure ou encore une pièce venue de matière avec cette carrure. Il peut s'agir d'une pièce monobloc ou à l'inverse d'une pièce formée de deux parties reliées entre elles de manière réversible et/ou étanche. L'élément d'habillage 2 comprend un corps creux comportant une enceinte dans laquelle est situé le substrat 5 pourvu du circuit d'antenne 10 et du circuit de commande tactile 13. Afin que ce circuit d'antenne 10 et ce circuit de commande 13 fonctionnent de manière efficace et/ou optimale, cet élément d'habillage 2 est réalisé dans au moins un matériau diélectrique et/ou électriquement non conducteur. Ledit au moins un matériau permet de contribuer à la réalisation de l'effet capacitif de l'organe de commande tactile 8. Ce matériau participe aussi à ne pas détériorer le rayonnement du circuit d'antenne 10, d'agrandir sa longueur électrique et d'améliorer son rendement par rapport à sa taille physique. Un tel matériau peut être par exemple un polymère, du titane ou une céramique, ou tout autre matériau de synthèse. On notera qu'il est possible que tout le corps de cet élément d'habillage 2 ne soit pas réalisé dans ce type de matériau mais que seulement des portions de ce corps dans lesquelles sont agencés le circuit d'antenne 10 et le circuit de commande 13 soient réalisées en ce matériau.

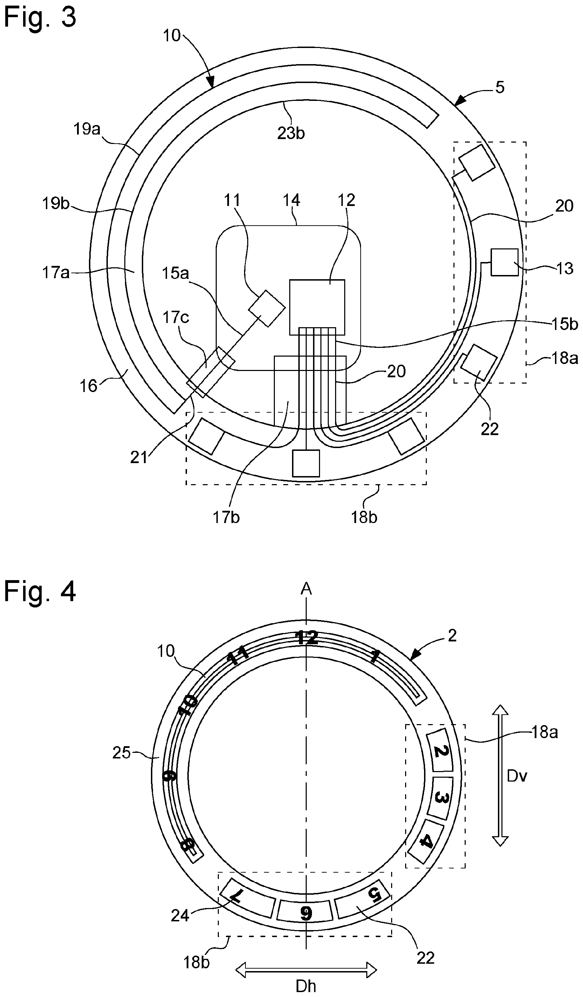

Lorsque l'objet électronique portable 1 est une montre électronique, l'élément d'habillage 2 peut être une lunette visible sur la figure 4. Une telle lunette 2 est alors localisée au niveau de la carrure et enserre la glace. Il peut s'agir d'une lunette tournante ou d'une lunette fixe. La lunette 2 peut également être agencée dans le boitier 3 afin de ne former qu'une seule pièce avec la carrure c'est-à-dire une carrure-lunette. La carrure et la lunette 2 présentent une face externe qui est la face visible par le porteur de cette montre. La lunette 2 peut comprend sur sa face externe une graduation. Dans l'exemple illustré, la graduation comprend des index figuratifs 24 qui se présentent sous la forme de chiffres (de préférence arabes). On remarquera en outre que dans un tel contexte le dispositif électronique 4 est par exemple un mouvement horloger électronique.

En référence aux figures 2 à 4, le substrat 5 compris dans cet élément d'habillage 2 est avantageusement réalisé sous la forme d'un circuit imprimé flexible (appelé couramment "flex"). Un tel substrat 5 aussi appelé « support » ou « plaque » est de préférence fabriqué en matière plastique flexible haute performance. Cet matière plastique peut être un polymère tel que le polyimide connu sous le nom KaptonTM ou encore un polyester. Ce substrat 5 comprend une partie principale 17a ayant une forme essentiellement circulaire et des première et deuxième parties de connexion17b, 17c définies sur un bord extérieur 23a (visible sur la figure 2) ou sur un bord intérieur 23b (visible sur la figure 3) de la partie principale 17a du substrat 5 en s'étendant radialement à partir de ce dit bord 23a, 23b. Ces première et deuxième parties de connexion 17b, 17c se présentent sous la forme d'une excroissance du substrat 5. Un tel substrat 5 comprend des faces supérieure 16 et inférieure planes et parallèles entre elles. La forme de la partie principale 17a du substrat 5 est similaire ou sensiblement similaire à celle de l'enceinte de la lunette 2 dans laquelle le substrat 5 est destiné à être positionné. Dans cette configuration, la face supérieure 16 de la partie principale 17a de ce substrat 5 est de préférence agencée dans cette enceinte en regard d'une paroi de cette enceinte qui constitue/forme une face externe de cet élément d'habillage 2. S'agissant des première et deuxième parties de connexion 17b, 17c elles sont destinées à être pliées chacune par rapport à la face supérieure 16 afin d'être connectées respectivement au microcontrôleur 12 de l'organe de commande 8 et au microcircuit 11 du module de communication 6. A cet effet, l'élément d'habillage 2 peut comprendre des ouvertures donnant accès à un circuit imprimé 14 du dispositif électronique 4 comportant le microcontrôleur 12 de l'organe de commande 8 et le microcircuit 11 du module de communication 6. De telles ouvertures ménagées dans le corps de cet élément d'habillage 2 sont susceptibles d'être traversées par ces première et deuxième parties 17b, 17c.

En référence aux figures 2 et 3, l'organe de commande 8 comprend le microcontrôleur 12 qui est connecté au circuit de commande tactile 13. Un tel circuit de commande tactile 13 comprend des électrodes 22 déposées sur la partie principale 17a du substrat 5 compris dans l'élément d'habillage 2. Chaque électrode 22 peut se présenter sous la forme d'une couche de matériaux conducteurs formant un point de connexion. Une telle électrode 22 possède une forme circulaire ou parallélépipédique voir triangulaire. Dans cette configuration, le circuit de commande 13 comprend aussi au moins une piste de connexion 20 comprise sur la face supérieure 16 du substrat 5. Cette dite au moins une piste de connexion 20 est apte à coopérer avec au moins une piste électrique 15b du circuit imprimé 14 du dispositif électronique 4 comprenant le microcontrôleur 12. De cette manière, chaque électrode 22 est ainsi connectée au microcontrôleur 12 à partir de cette dite au moins une piste de connexion 20 et de ladite au moins une piste électrique 15b. Ainsi la dite au moins une piste de connexion 20 est comprise sur la face supérieure 16 du substrat 5 en s'étendant de l'électrode 22 jusqu'à l'extrémité libre de la première partie de connexion 17b. On remarquera enfin que le circuit de commande tactile 13 comprend de préférence autant de pistes de connexion 20 que la partie principale 17a comportent d'électrodes 22.

Dans le présent mode de réalisation visible sur les figures 2 à 4 dans lequel l'objet 1 est une montre électronique, l'organe de commande tactile 8 comprend six électrodes 22 réparties sur la face supérieure 16 de la partie principale 17a du substrat 5. Plus précisément, ces électrodes 22 sont appliquées/déposées sur cette face supérieure 16 du substrat 5 de manière à définir/former deux zones tactiles 18a, 18b distinctes sur la face externe 25 de la lunette 2, ces deux zones tactiles 18a, 18b formant l'interface tactile dudit objet électronique 1. La première zone tactile 18a comprend trois électrodes 22 agencées respectivement sous les index 24 deux, trois et quatre définis sur la face externe 25 de la lunette 2. La deuxième zone tactile 18b comprend également trois électrodes 22 agencées respectivement sous les index 24 cinq, six et sept définis sur cette face externe 25 de la lunette 2. Dans cette configuration, la première zone tactile 18a permet au porteur de la montre d'interagir avec cette dernière en effectuant un déplacement en particulier un « déplacement vertical » (référencé Dv sur la figure 4) d'un accessoire tel qu'un stylet ou encore d'une extrémité d'un de ses membres comme un doigt sur cette première zone 18a. S'agissant de la deuxième zone tactile 18b, elle permet au porteur de la montre d'interagir avec cette dernière en effectuant un déplacement en particulier un « déplacement horizontal » (référencé Dh sur la figure 4) d'un tel accessoire ou encore de l'extrémité d'un de ses membres sur cette zone 18b. Le déplacement vertical décrit une trajectoire qui est sensiblement parallèle ou parallèle à un axe de symétrie A de la lunette 2 et le déplacement horizontal décrit une trajectoire qui est quant à elle sensiblement perpendiculaire ou perpendiculaire à cet axe A ou à la trajectoire décrit par le déplacement vertical. Un tel axe A sépare la lunette 2 en deux parties égales en reliant les index 24 douze et six présents sur la face externe 25 de cette lunette 2.

Dans le dispositif électronique 4, le module de communication 6 est apte permettre la connexion de l'objet électronique portable 1 à un réseau de communication de type Bluetooth. Autrement dit le module de communication 6 est configuré pour communiquer selon un protocole de type Bluetooth. De manière alternative, ce module de communication 6 peut être apte à permettre la connexion de l'objet électronique portable 1 à un réseau de localisation par satellite GNSS (Geolocation and Navigation Satellite System), tel que par exemple le GPS (Global Positioning System), Glonass ou Galileo. Ce module de communication 6 comprend le circuit d'antenne 10 connecté au microcircuit 11. Un tel circuit d'antenne 10 est compris sur la face supérieure 16 du substrat 5. Ce circuit d'antenne 10 comprend des premier et deuxième brins 19a, 19b présentant chacun une extrémité proximale et une extrémité distale, et s'étendant en parallèle entre leurs extrémités proximales et distales. Dans ce circuit d'antenne 10, l'architecture à deux brins en parallèle permet d'élargir la bande de fréquence (100MHz), nécessaire par exemple pour communiquer sur un réseau de communication de type Bluetooth (2.4 GHz). Dans ce circuit d'antenne 10, les premier et deuxième brins 19a, 19b sont connectés par leurs extrémités distales ainsi qu'au niveau de leurs extrémités proximales. Dans cette configuration, le circuit d'antenne 10 s'étend essentiellement selon une trajectoire en arc de cercle en comportant deux brins 19a, 19b agencés en parallèle sur le substrat 5 qui suit cette trajectoire. Ce circuit d'antenne 10 comprend également une piste de connexion 21 reliée à ces extrémités proximales qui est comprise sur la face supérieure 16 du substrat 5. Cette piste de connexion 21 est apte à coopérer avec au moins une piste électrique 15a du circuit imprimé 14 du dispositif électronique 4 comprenant le microcircuit 11 du module de communication 6. De cette manière, le circuit d'antenne 10 est connecté à ce microcircuit 11 à partir de cette dite au moins une piste de connexion 21 et de ladite au moins une piste électrique 15a. En outre, cette piste de connexion 21 est comprise sur la face supérieure 16 du substrat 5 en s'étendant des extrémités proximales des premier et deuxième brins 19a, 19b jusqu'à l'extrémité libre de la deuxième partie de connexion 17c du substrat 5.

Ainsi que nous l'avons vu, le circuit d'antenne 10 et le circuit de commande tactile 13 sont en tout ou partie réalisés sur des portions distinctes de la face supérieure 16 de la partie principale 17a du substrat 5. Plus précisément, cette face supérieure 16 de la partie principale 17a comprend deux portions présentant sensiblement une même surface ou de même surface. Cette première portion comprend les premier et deuxième brins 19a, 19b ainsi qu'une partie de la piste de connexion 21 du circuit d'antenne 10. La deuxième portion comprend quant à elle les électrodes 22 et une partie des pistes de connexion 20 du circuit de commande 13.

On notera en outre que le circuit de commande 13 et le circuit d'antenne 10 peuvent être sérigraphiés par de l'argent sur le substrat 5 en polyester ou peut être sérigraphiés par du cuivre sur un substrat 5 en polyimide.

## Revendications

1. Objet électronique portable (1) comprenant un boitier (3) pourvu d'un élément d'habillage (2) formant en tout ou partie une interface tactile dudit objet électronique (1), ledit élément d'habillage comportant un corps creux contenant un substrat (5) sur lequel sont réalisés un circuit d'antenne (10) d'un module de communication (6) dudit objet (1) et un circuit de commande tactile (13) d'un organe de commande tactile (8) de cet objet (1), ledit substrat (5) comprenant une partie principale (17a) et des première et deuxième parties de connexion (17b, 17c) destinées à être pliées chacune par rapport cette partie principale (17a), ce substrat (5) comprenant une face supérieure (16) sur laquelle sont réalisés le circuit d'antenne (10) et le circuit de commande tactile (13), ledit circuit d'antenne (10) comprenant des premier et deuxième brins (19a, 19b) réalisés sur une première portion de la face supérieure (16) comprise dans la partie principale (17a) du substrat (5), lesdits premier et deuxième brins (19a, 19b) présentant chacun une extrémité proximale et une extrémité distale, et s'étendant en parallèle entre leurs extrémités proximales et distales, les premier et deuxième brins (19a, 19b) étant connectés par leurs extrémités distales ainsi qu'au niveau de leurs extrémités proximales, ledit circuit de commande tactile (13) comprenant au moins une électrode (22) réalisée sur une deuxième portion de la face supérieure (16) comprise dans la partie principale (17a) du substrat (5), ladite électrode (22) étant formée d'une couche d'au moins un matériau conducteur appliquée sur ladite face supérieure (16), ledit circuit d'antenne (10) comprenant un microcircuit (11) connecté aux premier et deuxième brins (19a, 19b) par l'intermédiaire d'une piste de connexion (21) réalisée sur la face supérieure (16) du substrat (5).

2. Objet (1) selon la revendication précédente, **caractérisé en ce que** la face supérieure (16) de la partie principale (17a) de ce substrat (5) est de préférence positionnée dans une enceinte définie dans le corps creux de l'élément d'habillage (2) en regard d'une paroi de cette enceinte qui constitue une face externe de cet élément d'habillage (2).

3. Objet (1) selon l'une quelconque des revendications précédentes, **caractérisé en ce que** le substrat (5) est en plastique flexible.

4. Objet (1) selon l'une quelconque des revendications précédentes, **caractérisé en ce que** le circuit de commande (13) comprend un microcontrôleur (12) connecté à ladite au moins une électrode (22) par l'intermédiaire d'au moins une piste de connexion (20) réalisée sur la face supérieure (16) du substrat (5).

5. Objet (1) selon l'une quelconque des revendications précédentes, **caractérisé en ce que** l'élément d'habillage (2) est fabriqué en au moins un matériau diélectrique et/ou électriquement non conducteur.

6. Objet (1) selon l'une quelconque des revendications précédentes, **caractérisé en ce qu'**il est une montre notamment une montre connectée comprenant l'élément d'habillage (2) qui est une lunette pourvue de l'enceinte dans laquelle est agencé ledit substrat (5).

7. Objet (1) selon l'une quelconque des revendications précédentes, **caractérisé en ce que** le module de communication (6) est configuré pour communiquer selon un protocole de type Bluetooth.

## Patentansprüche

1. Tragbarer elektronischer Gegenstand (1), aufweisend ein Gehäuse (3), das mit einem Außenteil (2) vorgesehen ist, das ganz oder teilweise eine taktile Schnittstelle auf dem elektronischen Gegenstand (1) bildet, wobei das Außenteil einen Hohlkörper aufweist, der ein Substrat (5) enthält, über dem eine Antennenschaltung (10) in einem Kommunikationsmodul (6) auf dem Gegenstand (1) und eine taktile Steuerschaltung (13) in einem taktilen Steuerorgan (8) auf diesem Gegenstand (1) ausgebildet sind, wobei das Substrat (5) einen Hauptteil (17a) und einen ersten und einen zweiten Verbindungsteil (17b, 17c) aufweist, die jeweils dazu bestimmt sind, in Bezug auf diesen Hauptteil (17a) gebogen zu werden, wobei dieses Substrat (5) eine obere Fläche (16) aufweist, auf der die Antennenschaltung (10) und die taktile Steuerschaltung (13) ausgebildet sind, wobei die Antennenschaltung (10) eine erste und eine zweite Litze (19a, 19b) aufweist, die auf einem ersten Abschnitt der oberen Fläche (16) ausgebildet sind, der den Hauptteil (17a) des Substrats (5) aufweist, wobei jeder der ersten und zweiten Litze (19a, 19b) ein proximales Ende und ein distales Ende aufweist und sich parallel zwischen ihren proximalen und distalen Enden erstreckt, wobei die erste und zweite Litze (19a, 19b) sowohl an ihren distalen Enden als auch an ihren proximalen Enden verbunden sind, wobei die taktile Steuerung (13) mindestens eine Elektrode (22) aufweist, die auf einem zweiten Abschnitt der oberen Fläche (16) ausgebildet ist, die in dem Hauptteil (17a) des Substrats (5) enthalten ist, wobei die Elektrode (22) durch eine Schicht aus mindestens einem leitfähigen Material gebildet wird, die auf der oberen Fläche (16) aufgebracht ist, wobei die Antennenschaltung (10) eine Mikroschaltung (11) aufweist, die mit der ersten und zweiten Litze (19a, 19b) über eine Verbindungsleitung (21) verbunden ist, die auf der oberen Fläche (16) des Substrats (5) ausgebildet ist.

2. Gegenstand (1) nach dem vorhergehenden Anspruch, **dadurch gekennzeichnet, dass** die obere Fläche (16) auf dem Hauptteil (17a) dieses Substrats (5) vorzugsweise in einem in dem Hohlkörper des Außenteils (2) definiertem Fach gegenüber einer Wand dieses Fachs, die eine Außenfläche dieses Außenteils (2) bildet, angeordnet ist.

3. Gegenstand (1) nach einem der vorhergehenden Ansprüche, **dadurch gekennzeichnet, dass** das Substrat (5) aus flexiblem Kunststoff hergestellt ist.

4. Gegenstand (1) nach einem der vorhergehenden Ansprüche, **dadurch gekennzeichnet, dass** die Steuerschaltung (13) einen Mikrocontroller (12) aufweist, der mit der mindestens einen Elektrode (22) über mindestens eine über der oberen Fläche (16) des Substrats (5) ausgebildete Verbindungsleitung (20) verbunden ist.

5. Gegenstand (1) nach einem der vorhergehenden Ansprüche, **dadurch gekennzeichnet, dass** das Außenteil (2) aus mindestens einem dielektrischen und/oder elektrisch nicht leitenden Material hergestellt ist.

6. Gegenstand (1) nach einem der vorhergehenden Ansprüche, **dadurch gekennzeichnet, dass** er eine Uhr ist, insbesondere eine Smartwatch, aufweisend das Außenteil (2) , das eine Fassung ist, die mit dem Fach vorgesehen ist, in dem das Substrat (5) angeordnet ist.

7. Gegenstand (1) nach einem der vorhergehenden Ansprüche, **dadurch gekennzeichnet, dass** das Kommunikationsmodul (6) dazu eingerichtet ist, gemäß einem Protokoll der Art Bluetooth zu kommunizieren.

## Claims

1. A portable electronic object (1) comprising a case (3) provided with an external part (2) entirely or partially forming a tactile interface on said electronic object (1), said external part comprising a hollow body containing a substrate (5) over which are formed an antenna circuit (10) in a communication module (6) on said object (1) and a tactile control circuit (13) in a tactile control organ (8) on this object (1), said substrate (5) comprising a main part (17a) and first and second connecting parts (17b, 17c) each designed to be bent with respect to this main portion (17a), this substrate (5) comprising an upper face (16) over which the antenna circuit (10) and the tactile control circuit (13) are formed, said antenna circuit (10) comprising first and second strands (19a, 19b) formed over a first portion of the upper face (16) comprised in the main part (17a) of the substrate (5), each of said first and second strands (19a, 19b) having a proximal end and a distal end, and extending in parallel between their proximal and distal ends, the first and second strands (19a, 19b) being connected by their distal ends as well as at their proximal ends, said tactile control circuit (13) comprising at least one electrode (22) formed over a second portion of the upper face (16) comprised in the main part (17a) of the substrate (5), said electrode (22) being formed by a layer of at least one conductive material applied over said upper face (16), said antenna circuit (10) comprising a microcircuit (11) connected to the first and second strands (19a, 19b) via a connecting lead (21) formed over the upper face (16) of the substrate (5).

2. The object (1) according to the preceding claim, **characterised in that** the upper face (16) on the main part (17a) of this substrate (5) is preferably positioned in a hatch defined in the hollow body of the external part (2) facing a wall of this hatch which forms an outer face of this external part (2).

3. The object (1) according to any of the preceding claims, **characterised in that** the substrate (5) is made of flexible plastic.

4. The object (1) according to any of the preceding claims, **characterised in that** the control circuit (13) comprises a microcontroller (12) connected to said at least one electrode (22) via at least one connecting lead (20) formed over the upper face (16) of the substrate (5).

5. The object (1) according to any of the preceding claims, **characterised in that** the external part (2) is manufactured in at least one dielectric and/or electrically non-conductive material.

6. The object (1) according to any of the preceding claims, **characterised in that** it is a watch, in particular a smartwatch comprising the external part (2) which is a bezel provided with the hatch in which said substrate (5) is arranged.

7. The object (1) according to any of the preceding claims, **characterised in that** the communication module (6) is configured to communicate according to a Bluetooth-type protocol.
